# EUROPEAN PATENT APPLICATION

(11) **EP 3 367 552 A1**
(43) Date of publication of application: **29.08.2018**
(21) Application number: 17158000.4
(22) Date of filing: 24.02.2017
(51) Int. Cl.: H02M 7/5387

(54) **INVERTERS**

(71) Applicant: Siemens Aktiengesellschaft, 80333 München (DE)
(72) Inventor: Aguilar Vega, Fernando, Congleton, CW12 1BN (GB); Carter, Robert, Knutsford, WA16 8XU (GB)
(74) Representative: Maier, Daniel Oliver

(57) **Abstract**

This disclosure relates to inverters (100, 120), such as power inverters. Such an inverter (100, 120) is configured such that its switches (140 to 145) are controlled according to a space-vector-modulation switching sequence to create AC voltage waveforms at its output terminals (30, 32, 34), the voltage waveforms defining a voltage space vector which rotates through 360 degrees of phase, wherein the switching sequence is an asymmetrical discontinuous space-vector-modulation switching sequence and the switches (140 to 145) comprise wide-bandgap semiconductor devices.

## Description

### Technical field of the invention

The present disclosure relates to inverters, for example power inverters.

### Background of the invention

A power inverter, or inverter, is generally regarded as being an electronic device or circuitry that changes direct current (DC) to alternating current (AC). Typically, a DC voltage source provides the source of power, and the inverter outputs one or more AC voltage signals based on connections between its inputs and outputs which change over time.

In power electronics applications, pulse width modulation (PWM) inverters play a key role due to their ability to produce AC voltages of variable magnitude as well as variable frequency. PWM inverters thus are commonly used for example for driving motor loads with a need for adjustable speed where the motor load is supplied with variable voltage or variable frequency.

One common goal of inverter topologies and PWM schemes is to generate an output voltage with a sinusoidal voltage waveform of a desired frequency and magnitude. In many inverters, this goal is approached by dividing a sinusoidal waveform into samples, assigning each sample a duty cycle value corresponding to for example the waveform's mean over the sample, and connecting the output terminals of the inverter to a fixed DC voltage supply, in either positive or negative direction, over time via switches using a switching sequence.

Space vector modulation (SVM) is an algorithm or switching sequence for the control of PWM. It has been used to drive 3-phase AC powered motors at varying speeds from DC using an inverter.

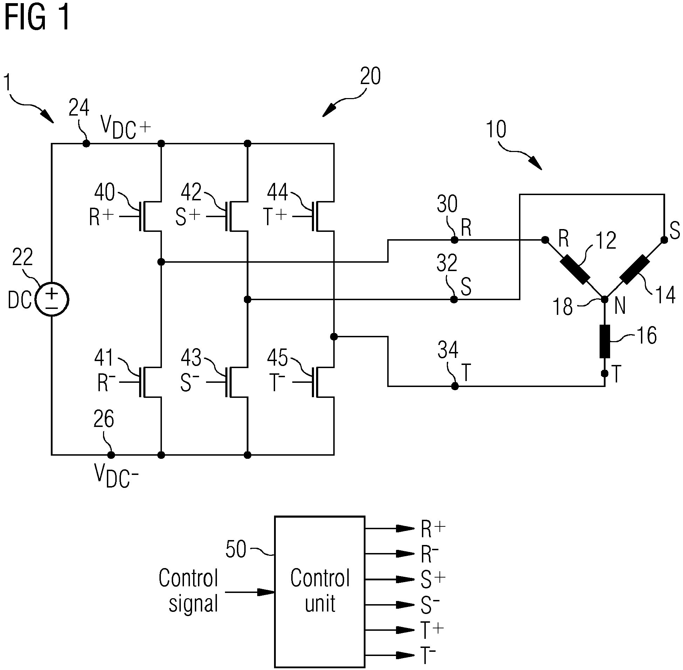

By way of example, Figure 1 is a schematic diagram of a previously-considered motor-drive arrangement 1. Arrangement 1 comprises a 3-phase motor 10 connected to be driven by an inverter 20.

Motor 10 is modelled as inductances 12, 14 and 16 for respective motor phases R, S and T, connected from corresponding R, S and T input terminals to a common point 18.

Inverter 20 comprises DC voltage source 22, input terminals 24 and 26, output terminals 30, 32 and 34, and switches 40 to 45.

DC source 22 is connected between the input terminals 24 and 26 so as to establish first and second DC electrical potential levels V_{DC+} and V_{DC-} at the first and second input terminals 24 and 26, respectively. Input terminals 24 and 26 may collectively be considered an input of the inverter 20.

The output terminals 30, 32 and 34 are for phases R, S and T of the motor 10, as indicated in Figure 1, and are connected accordingly to inductances 12, 14 and 16, respectively. Output terminal 30 for phase R is connected via switch 40 to input terminal 24 and via switch 41 to input terminal 26. Output terminal 32 for phase S is connected via switch 42 to input terminal 24 and via switch 43 to input terminal 26. Output terminal 34 for phase T is connected via switch 44 to input terminal 24 and via switch 45 to input terminal 26.

The switches for each phase (e.g. switches 40 and 41 for phase R) should be controlled in a complementary manner, so that at any one time only one of them is ON. Otherwise, the DC voltage source 22 would be short-circuited. As such, the control signals for switches 40 and 41 are indicated as being opposite or complementary signals R+ and R-, so that when switch 40 is ON switch 41 is OFF, and *vice versa.* Control signals S+ and S- for switches 42 and 43, and T+ and T- for switches 44 and 45, will be understood accordingly.

Arrangement 1 may be provided with a control unit 50, operable to output control signals R+, R-, S+, S-, T+ and T- in dependence upon an input control signal, as indicated in Figure 1.

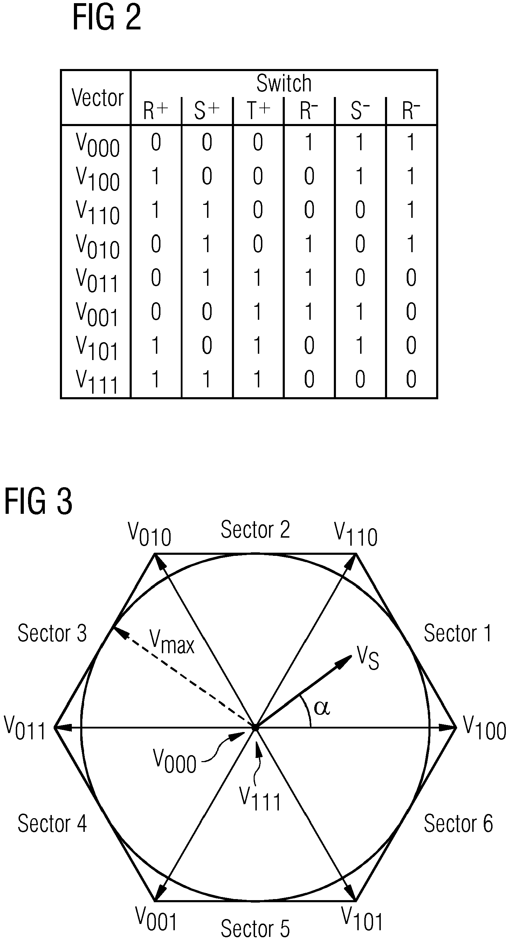

Figure 2 is a table presenting the eight possible switching voltage vectors (or switching combinations) for the inverter 20, given the above control signals. The entries "0" and "1" in the table are taken to indicate that the corresponding switches are OFF and ON, respectively. Thus, for vector V₀₀₀ switches 40, 42, and 44 are OFF and switches 41, 43 and 45 are ON. Such connections to V_{DC-} for all phases would produce 0 V potential differences across the inductances 12, 14 and 16. For vector V₁₁₁ switches 40, 42, and 44 are ON and switches 41, 43 and 45 are OFF. Such connections to V_{DC+} for all phases would again produce 0 V potential differences across the inductances 12, 14 and 16. The voltage vectors V₀₀₀ and V₁₁₁ may therefore be referred to as "zero" vectors. The further voltage vectors, in which at least one of the phases is connected to V_{DC+} and at least another of them is connected to V_{DC-}, will be understood as "active" vectors which produce actual potential differences across the appropriate inductances.

If the vectors are deployed one after the other in sequence down the table of Figure 2, it will be appreciated that the potential differences across the inductances 12, 14 and 16 will vary as pulsed sinusoids, with the voltage waveforms for the inductances 12, 14 and 16 mutually offset by 120 degrees of phase.

Figure 3 is a so-called space vector representation of the output voltages caused by the vectors of Figure 2, expressing the voltage vectors geometrically to form a hexagonal arrangement. The six vectors extending from the central origin to vertices of the indicated hexagon correspond to the "active" vectors of Figure 2, with the "zero" vectors located at the origin. The sectors of the hexagon between adjacent "active" vectors, which may be referred to as phase sectors, are numbered 1 to 6 as indicated. For example, sectors 1 and 2 together may form a 120 degree phase sector.

Space vector PWM involves time averaging use of the adjacent "active" vectors and the "zero" vectors for each sector. In this way, a desired voltage vector V_{S} may be synthesized by appropriate PWM of the vectors of the sector concerned. For example, the voltage vectors V₁₁₀, V₁₀₀, V₀₀₀ and V₁₁₁ may be used (through use of appropriate switching patterns applied to switches 40 to 45) to synthesize voltage vector V_{S} in sector 1 of Figure 3. Again through use of appropriate switching patterns, the vector V_{S} can be caused to rotate smoothly (or non-smoothly), and its magnitude adjusted to up to V_{MAX} (defining the circle in Figure 3) in the under-modulation region before non-linear over-modulation.

However, normal space vector modulation methods have been found to cause the inverter to output maximum switching frequency common mode noise at minimum output voltage. This has been found to be particularly problematic as switching speeds and operating voltages increase.

### Solution according to the invention

According to a first aspect of the present disclosure, there is provided an inverter, comprising: an input connectable to a DC power source so as to establish at least first and second DC electrical potential levels at corresponding first and second input terminals of the input; output circuitry comprising a plurality of output terminals, each output terminal connected via switches to said input terminals (i.e. to the relevant DC electrical potential levels), those switches operable to selectively connect that output terminal conductively to one of said input terminals at a time, and each output terminal configured to be connected to a corresponding input terminal of a load; and a control unit configured to control the switches according to a space-vector-modulation switching sequence to create AC voltage waveforms at said output terminals, the voltage waveforms defining a voltage space vector which rotates through 360 degrees of phase (or which simply rotates in phase), wherein: the switching sequence is an asymmetrical discontinuous space-vector-modulation switching sequence; and said switches comprise wide-bandgap semiconductor devices.

Effectively, there is provided an inverter having a control unit configured to control its switches according to an asymmetrical discontinuous space-vector-modulation switching sequence, those switches comprising wide-bandgap semiconductor devices.

Such an inverter may be considered a power inverter, for example for driving an inductive load such as an electric motor. Such a motor may be a 3-phase motor.

The circuitry connections may be considered to be conductive connections, and circuitry connections described herein will be understood accordingly. The connections to the input terminals may be considered connections to the DC electrical potential levels concerned. In the case of two DC electrical potential levels, these may be referred to as e.g. V_{DC+} and V_{DC-}. In the case of three DC electrical potential levels, these may be referred to as e.g. V_{DC+}, V_{MID} and V_{DC-}. Of course, V_{MID} may be generated in practice from a connection between V_{DC+} and V_{DC-}, and in that case the V_{MID} node in the circuit may be considered an input terminal (e.g. a third input terminal) even though its DC electrical potential level may be generated from that at other input terminals. Each terminal may be considered a circuitry node, or may be made up of a plurality of such nodes.

The switches may be or comprise transistors, in particular wide-bandgap semiconductor transistors. Such transistors may be controlled by control signals applied to their gate terminals. The transistors may be connected so that their channels (source to drain) form the connections between the relevant terminals or nodes of the inverter. Thus, through control of its gate terminal, such a transistor may conductively connect an output terminal to an input terminal, or conversely conductively separate or disconnect an output terminal from an input terminal.

The control unit may be implemented in hardware or in software running on a processor, or in any combination of hardware and software.

The asymmetrical discontinuous space-vector-modulation switching sequence may be implemented by virtue of control signals applied to the switches, so that the switches are controlled to be ON of OFF in a sequence.

The use of wide-bandgap semiconductor devices enables fast switching and the use of a high-voltage DC source. The use of an asymmetrical discontinuous space-vector-modulation switching sequence enables ringing in output currents (for example within an inductor of an output filter) which might otherwise occur to be greatly reduced. If such ringing were not reduced, the switches may be damaged in operation or their lifetime reduced.

The switching sequence may be configured to control the switches so that for each phase sector of consecutive phase sectors (as phase is rotated through), a corresponding one of the output terminals (in a rotating sequence, such as R, S, T, R, S, T, etc.) is held connected to one of the DC electrical potential levels (e.g. to the first or second DC electrical potential level, or first or second input terminal), or to another given DC electrical potential level, over that sector. The DC electrical potential level (or the input terminal) to which a said output terminal is held conductively connected may be the same for each of those phase sectors. In the case of a multilevel inverter having an odd number of established DC electrical potential levels (such as 3), the DC electrical potential level (or the input terminal) to which a said output terminal is held conductively connected may be the V_{MID} level for each of those phase sectors. Such phase sectors may be 120 degree phase sectors.

It is envisaged that the DC electrical potential level (or the input terminal) to which a said output terminal is held conductively connected need not be the same for each of those phase sectors, in order to provide some benefit. For example, in a multilevel inverter having several established DC electrical potential levels (e.g. 10), the DC electrical potential level (or the input terminal) to which a said output terminal is held conductively connected may be one of a group of levels which are within a given range of one another. The given range may be smaller than the range between the highest and lowest established DC electrical potential levels, for example less than 50% of that range, or less than 25% of that range, or less than 10% of that range.

A filter may be connected at each of the output terminals so that the AC voltage waveforms provided at those output terminals have been filtered by the corresponding filters. Such filters may be LC filters, for example sinewave filters. Such filters may be low-pass frequency filters, and may enable the output voltage waveforms to be smoothed.

Each such filter may comprise: a first capacitor connected between the output terminal concerned and the first input terminal (effectively the first DC electrical potential level or another high DC electrical potential level); a second capacitor connected between the output terminal concerned and the second input terminal (effectively the second DC electrical potential level or another low DC electrical potential level); and an inductor connected in series along a signal path passing through the output terminal concerned and configured to carry the AC voltage waveform concerned. Other such LC filters may be employed, for example having multiple stages of filtering.

The load may comprise the windings of a three-phase motor, i.e. effectively mutually-connected inductors forming an inductive load.

According to a second aspect of the present disclosure, there is provided a system comprising: an inverter according to the aforementioned first aspect; and the DC power source conductively connected to the input of the inverter so as to establish at least the first and second DC electrical potential levels at the corresponding first and second input terminals of the input of the inverter.

The system may also comprise the load, wherein the output terminals of the inverter are conductively connected to the corresponding input terminals of the load.

According to a third aspect of the present disclosure, there is provided a method of controlling an inverter of the aforementioned first aspect. Such an inverter comprises: an input connectable to a DC power source so as to establish at least first and second DC electrical potential levels at corresponding first and second input terminals of the input; and output circuitry comprising a plurality of output terminals, each output terminal connected via switches to said input terminals, those switches operable to selectively connect that output terminal conductively to one of said input terminals at a time, and each output terminal configured to be connected to a corresponding input terminal of a load, wherein the switches comprise wide-bandgap semiconductor devices. Such a method comprises controlling the switches according to an asymmetrical discontinuous space-vector-modulation switching sequence to create AC voltage waveforms at said output terminals, the voltage waveforms defining a voltage space vector which rotates through 360 degrees of phase.

According to a fourth aspect of the present disclosure, there is provided a control program for controlling an inverter of the aforementioned first aspect. Such an inverter comprises: an input connectable to a DC power source so as to establish at least first and second DC electrical potential levels at corresponding first and second input terminals of the input; and output circuitry comprising a plurality of output terminals, each output terminal connected via switches to said input terminals, those switches operable to selectively connect that output terminal conductively to one of said input terminals at a time, and each output terminal configured to be connected to a corresponding input terminal of a load, wherein the switches comprise wide-bandgap semiconductor devices. Such a control program is configured to cause a processor of the inverter to carry out a method comprising: controlling the switches according to an asymmetrical discontinuous space-vector-modulation switching sequence to create AC voltage waveforms at said output terminals, the voltage waveforms defining a voltage space vector which rotates through 360 degrees of phase.

According to a fifth aspect of the present disclosure, there is provided a computer readable medium having the control program of the aforementioned fourth aspect stored thereon.

An apparatus or computer program according to preferred embodiments may comprise any combination of the method aspects. Methods or computer programs according to further embodiments can be described as computer-implemented in that they require processing and memory capability.

The apparatus according to preferred embodiments is described as configured or arranged to, or simply "to" carry out certain functions. This configuration or arrangement could be by use of hardware or middleware or any other suitable system. In preferred embodiments, the configuration or arrangement is by software.

Thus according to one aspect there is provided a program which, when loaded onto at least one computer configures the computer to become the apparatus according to any of the preceding apparatus (inverter/system) definitions or any combination thereof.

According to a further aspect there is provided a program which when loaded onto at least one computer configures the at least one computer to carry out the method steps according to any of the preceding method definitions or any combination thereof.

In general the computer may comprise the elements listed as being configured or arranged to provide the functions defined. For example this computer may include memory, processing, and a network interface.

The invention or aspects thereof can be implemented in digital electronic circuitry, or in computer hardware, firmware, software, or in combinations of them. The invention can be implemented as a computer program or computer program product, i.e., a computer program tangibly embodied in a (non-transitory) information carrier, e.g., in a machine-readable storage device, or in a propagated signal, for execution by, or to control the operation of, one or more hardware modules.

A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network.

Method steps of the invention can be performed by one or more programmable processors executing a computer program to perform functions of the invention by operating on input data and generating output. Apparatus of the invention can be implemented as programmed hardware or as special purpose logic circuitry, including e.g., an FPGA (field programmable gate array) or an ASIC (application-specific integrated circuit).

Processors suitable for the execution of a computer program include, by way of example, both general and special-purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The present invention is described in terms of particular embodiments. Other embodiments are within the scope of the following claims. For example, the steps of the present invention can be performed in a different order and still achieve desirable results. Multiple test script versions can be edited and invoked as a unit without using object-oriented programming technology; for example, the elements of a script object can be organized in a structured database or a file system, and the operations described as being performed by the script object can be performed by a test control program.

To avoid unnecessary duplication of effort and repetition of text in the specification, certain features are described in relation to only one or several aspects or embodiments of the present invention. However, it is to be understood that, where it is technically possible, features described in relation to any aspect or embodiment of the present invention may also be used with any other aspect or embodiment of the invention.

### Brief Description of the Drawings

The above mentioned attributes, features, and advantages of this invention and the manner of achieving them, will become more apparent and understandable (clear) with the following description of embodiments of the invention in conjunction with the corresponding drawings, wherein:
Figure 1, as described above, is a schematic diagram of a previously-considered motor-drive arrangement;
Figure 2, as described above, is a table presenting the eight possible switching voltage vectors (or switching combinations) for the inverter of Figure 1;
Figure 3, as described above, is a space vector representation of the output voltages caused by the voltage vectors of Figure 2;
Figure 4 is a schematic diagram of a motor-drive arrangement embodying the present invention;
Figure 5 is a schematic diagram of a filter, as an example one of the filters of Figure 4;
Figure 6 is a schematic diagram of an example detailed implementation of circuitry for one of the phases of the motor-drive arrangement of Figure 4;
Figure 7 is a schematic diagram showing part of a switching sequence for a discontinuous modulation mode of operation;
Figure 8 is a signal diagram showing a portion of a switching sequence of ADSVM;
Figure 9 indicates common mode voltage for ADSVM at 50% modulation depth;
Figure 10 indicates common mode voltage for continuous SVM at 50% modulation depth;
Figures 11 and 12 are signal diagrams indicating inductor current, motor current, and normalized output voltage;
Figures 13 and 14 are signal diagrams showing normalized output voltages corresponding to the normalized output voltage of Figure 12;
Figure 15 presents a flow diagram of a method which may be carried out by the control unit of Figure 4; and
Figure 16 is a schematic diagram of a system which may be used to implement the method of Figure 15.

### Description of the preferred embodiments

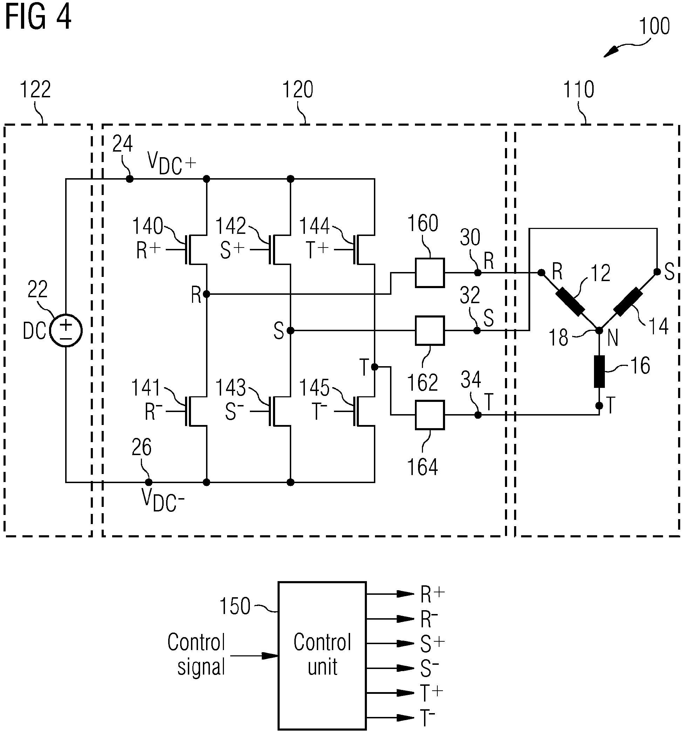

Figure 4 is a schematic diagram of a motor-drive arrangement 100. Arrangement 100 has various common elements with arrangement 1, and thus where appropriate like elements have been denoted with like reference signs.

Arrangement 100 comprises a 3-phase electric motor 110 (as an example load) connected to be driven by an inverter 120. Motor 110 may be the same as motor 10 and is thus modelled as inductances 12, 14 and 16 for respective motor phases R, S and T, connected from respective input terminals to a common point 18.

Inverter 120 comprises a DC voltage source 122 (which may be referred to as a DC link), input terminals 24 and 26, output terminals 30, 32 and 34, and switches 140 to 145.

DC source 122 may be the same as DC source 20 as indicated, and is connected between the input terminals 24 and 26 so as to establish first and second DC electrical potential levels V_{DC+} and V_{DC-} at the first and second input terminals 24 and 26, respectively. Input terminals 24 and 26 may collectively be considered an input of the inverter 120. The potential difference V_{DC-} could for example be biased to DC ground and referred to as such.

The output terminals 30, 32 and 34 are for phases R, S and T of the motor 110, as indicated in Figure 4, and are connected accordingly to inductances 12, 14 and 16, respectively. Output terminal 30 for phase R is connected via switch 140 to input terminal 24 and via switch 141 to input terminal 26. Output terminal 32 for phase S is connected via switch 142 to input terminal 24 and via switch 143 to input terminal 26. Output terminal 34 for phase T is connected via switch 144 to input terminal 24 and via switch 145 to input terminal 26.

Switches 140 to 145 thus correspond to switches 40 to 45 of Figure 1, however they are wide-bandgap semiconductor transistors. They are wide-bandgap semiconductor devices, which may be referred to simply as wide-bandgap transistors.

"Wide-bandgap" refers to higher-energy electronic bandgaps - the difference in energy levels that creates the semiconductor action as electrons switch between the two levels. Silicon and other common non-wide-bandgap materials have a bandgap of the order of 1 to 1.5 electronvolt (eV). Wide-bandgap materials in contrast typically have bandgaps of the order of 2 to 4 eV.

The higher energy gap of wide-bandgap semiconductor materials, such as Galliam Nitride (GaN) and Silicon Carbide (SiC) with bandgap energies of 3.3.and 3.4 eV respectively, permit devices to operate at much higher voltages, frequencies and temperatures than conventional semiconductor materials like silicon and gallium arsenide. For example, taking switches 40 to 45 of Figure 1 as being non-wide-bandgap devices, it may be considered that switches 140 to 145 of Figure 4 may operate approximately 10x as fast, or switch approximately 10x as often.

As in Figure 1, the switches for each phase in Figure 4 (e.g. switches 140 and 141 for phase R) should be controlled in a complementary manner, so that at any one time only one of them is on. The control signals R+, R-, S+, S-, T+ and T- in Figure 4 correspond to those in Figure 1 in terms of their labelling, and duplicate description is omitted.

Arrangement 100 is provided with a control unit 150, operable to output control signals R+, R-, S+, S-, T+ and T- in dependence upon an input control signal as indicated. The generation of signals R+, R-, S+, S-, T+ and T- in arrangement 100 will be described in more detail below, however it will be understood that the use of space vector modulation (SVM) as described in conjunction with Figures 2 and 3 applies also to arrangement 100. However, the form of SVM created by control signals R+, R-, S+, S-, T+ and T- in Figure 4 differs from that created by control signals R+, R-, S+, S-, T+ and T- in Figure 1.

Arrangement 100 comprises filters 160, 162 and 164, provided for phases R, S and T, respectively. As such, filters 160, 162 and 164 are connected at the respective output terminals 30, 32 and 34 so that the AC voltage waveforms provided at those output terminals have been filtered by those filters. Filters 160, 162 and 164 may be LC filters, and may be referred to as sinewave or sinusoidal filters. Sinewave filters may be considered low-pass frequency filters, which - in the case of Figure 4 - convert the approximated sinewave voltage waveforms provided at their inputs into smoother sinewave voltage waveforms, for example with lower residual ripple. Such filters may for example protect the motor 110 against excessive voltage spikes and overheating, and decrease switching noise levels and enable longer cable layouts.

Filters 160, 162 and 164 may be the same as one another. Indeed, it will be appreciated that the circuitry for each of phases R, S and T is essentially the same.

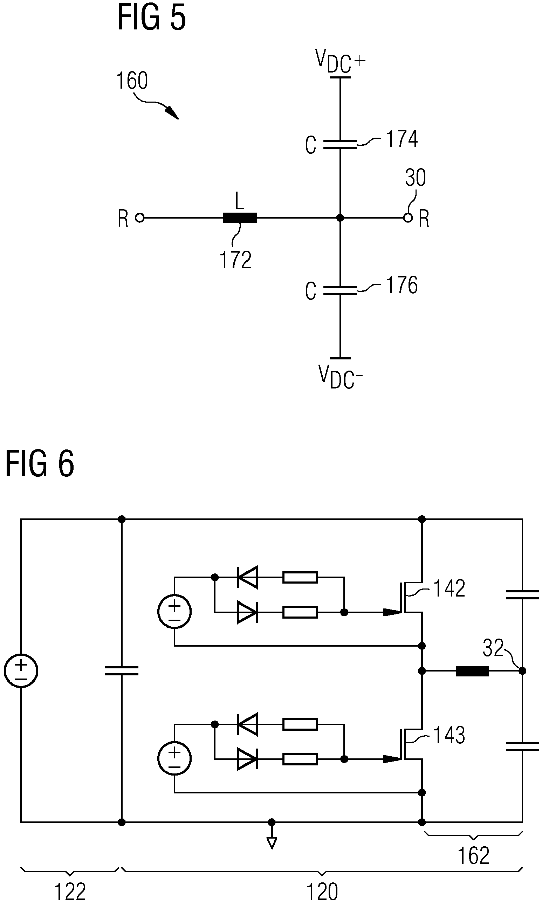

Figure 5 is a schematic diagram of filter 160, as an example one of filters 160, 162 and 164. Filter 160 comprises an inductor 172 and capacitors 174 and 176.

Inductor 172 is connected in series along the signal path passing through the output terminal 30 from the node between switches 140 and 141. The capacitor 174 is connected between the output terminal 30 and the DC electrical potential level V_{DC+}, i.e. effectively the input terminal 24. The capacitor 176 is connected between the output terminal 30 and the DC electrical potential level V_{DC-}, i.e. effectively the input terminal 26.

Of course, the skilled reader will appreciate that other LC sinewave filters are possible and that filter 160 in Figure 5 is merely an example.

Figure 6 is a schematic diagram of an example detailed implementation of circuitry for one of the phases, in this case phase S, of arrangement 100. Reference numerals used in Figure 4 have been employed in Figure 6 to ease comparison. It will be understood that the power sources shown controlling the gate terminals of the switches (transistors) 142 and 143 will be controllable to implement the desired switching sequence.

Before further details of the arrangement 100 are explained, it is useful to consider problems that have been encountered.

The present inventors have determined that "normal" space-vector-modulation switching sequences (such as explained in connection with Figure 3 for causing voltage vector V_{S} to rotate) cause the inverter to output maximum switching frequency common-mode noise at minimum output voltage. This is expensive and inefficient to filter successfully.

As will become apparent, even normal (i.e. symmetrical) discontinuous modulation modes (Symmetrical Discontinuous Space Vector Modulation, SDSVM) include full DC link voltage steps on the output, i.e. with an output terminal during certain phase sectors being connected alternately to V_{DC+} and V_{DC-}, and this triggers ringing in any output filter such as filters 160, 162 and 164, which could damage the motor 110 and/or the switches 140 to 145.

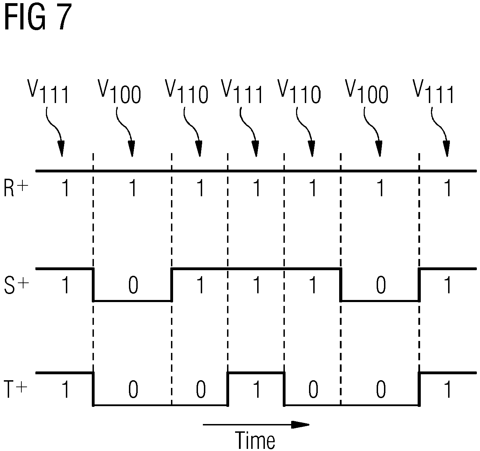

Figure 7 is a schematic diagram showing part of a switching sequence for a discontinuous modulation mode of operation, with the voltage vectors of Figure 2 identified. Through time averaging of the vectors indicated, it will be appreciated that the synthesized vector V_{S} would be caused to rotate. Note that over the phase sector shown the switches for phase R do not switch, the switching necessary for the modulation being carried out by the switches for phases S and T, leading to a reduction in switching losses by 1/3 (as compared to a case in which the switches for all 3 phases are switching). The phase for which the switches are effectively held ("clamping" the relevant output terminal to either V_{DC+} or V_{DC-}) may rotate through R, S and T for consecutive phase sectors, for example 120 degree phase sectors. For symmetrical discontinuous modulation as mentioned above, the clamping (maintained or held connection) for any one phase alternates between clamping to V_{DC+} and V_{DC-} (for the phase sector in Figure 7, the clamping is to V_{DC+} for phase R), hence the full DC link voltage steps.

Given the problem of ringing in the output filters mentioned above, normal (symmetrical) discontinuous modulation modes have been found to be impractical with a sinewave filter such as filters 160, 162 and 164. The inventors have considered use of large common-mode chokes instead of using sinewave filters. However, these would get hot in use which is impractical in various applications.

As an overview, instead of normal (symmetrical) discontinuous modulation modes, the arrangement 100 is configured to carry out Asymmetrical Discontinuous Space Vector Modulation (ADSVM), which produces the same phase-to-phase output voltage as Symmetrical Discontinuous Space Vector Modulation (SDSVM). In ADSVM, unlike in SDSVM, the above clamping for any one phase is always to V_{DC+} or always to V_{DC-}, hence avoiding the full DC link voltage steps as will become apparent.

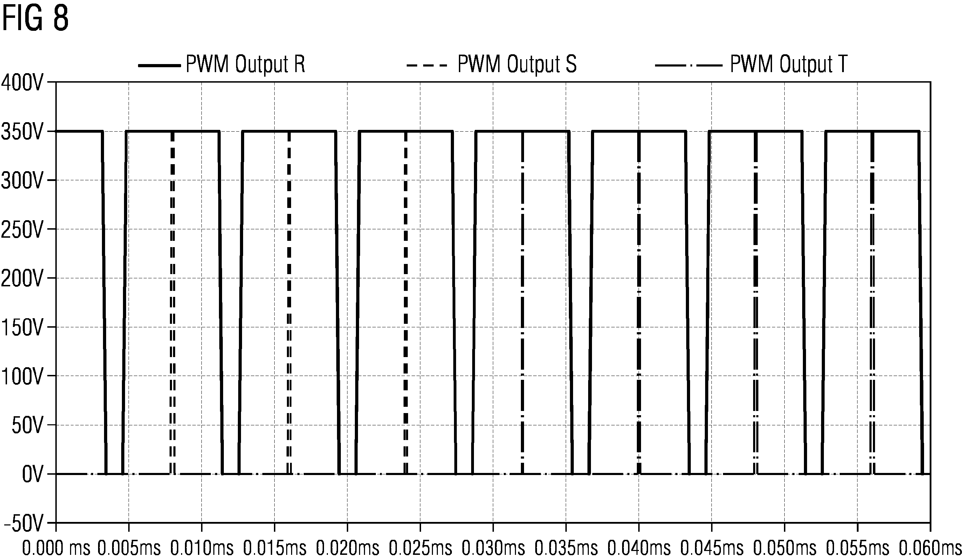

Figure 8 is a signal diagram showing a portion of a switching sequence of ADSVM, in this case at about 60% modulation depth. The three traces (continuous trace, dashed trace, and dash-dot trace) correspond to phases R, S and T, respectively, and may be considered to be the Figure 4 control signals R+, S+, T+, respectively. When one of the traces is HIGH in Figure 8 it may be considered to correspond to "1" or "ON" for the switch concerned, and conversely when one of the traces is LOW in Figure 8 it may be considered to correspond to "0" or OFF for the switch concerned.

Figure 8 shows the transition from one 120 degree phase sector to the next. Thus, in the left-hand half of Figure 8, the dash-dot trace is held low (clamping the T phase to V_{DC-}) and the continuous and dashed traces actively switch to perform the necessary PWM. In the right-hand half of Figure 8, the dashed trace is held low (clamping the S phase to V_{DC-}) and the continuous and dash-dot traces actively switch to perform the necessary PWM. In this example, although not shown in Figure 8, it will be appreciated that for ADSVM the clamping in successive phase sectors is repeatedly to V_{DC-}.

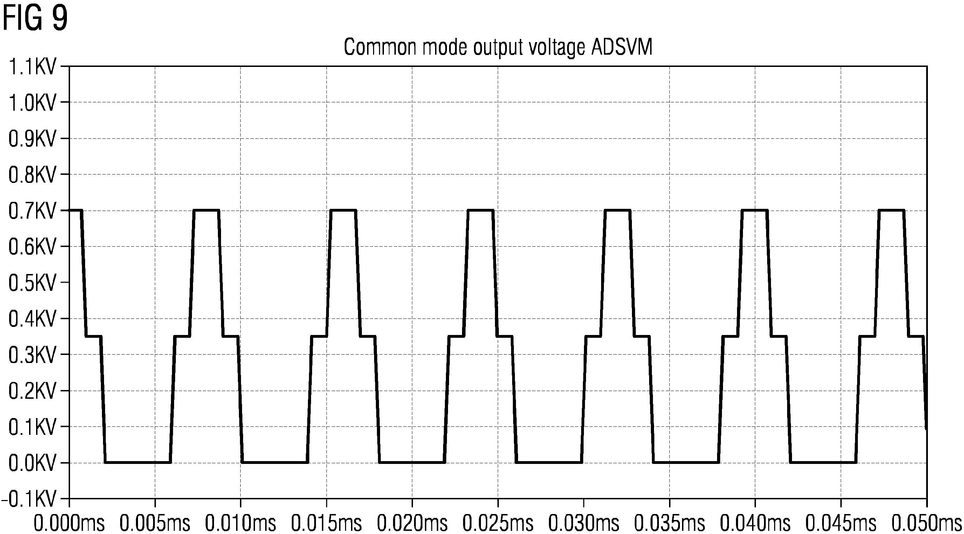

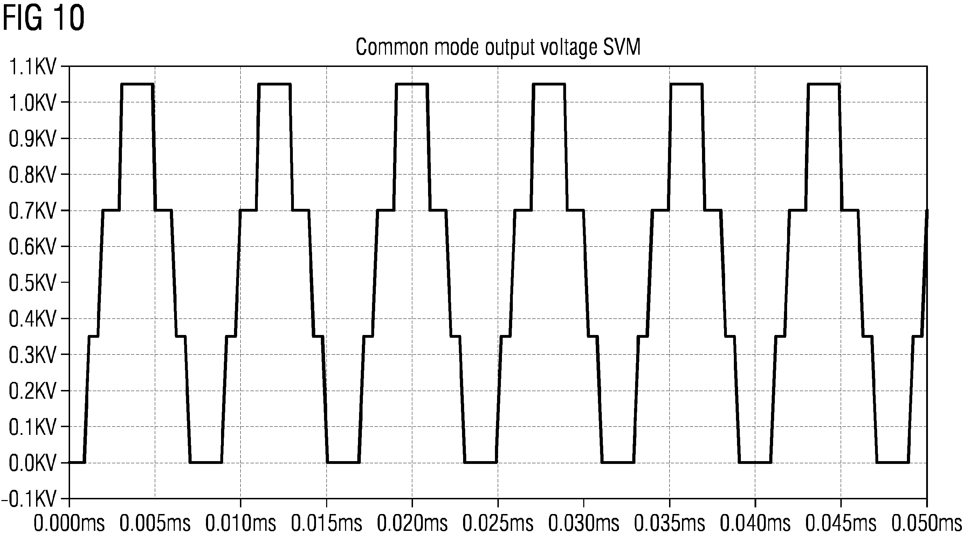

As a consequence of the discontinuous modulation, i.e. the clamping of one of the R, S, T phases in successive phase sectors, the common mode voltage is reduced by an average of 1/3 compared to normal (i.e. continuous rather than discontinuous) Space Vector Modulation. Figures 9 and 10 are signal diagrams provided for comparison purposes. Figure 9 indicates common mode voltage for ADSVM at 50% modulation depth, whereas Figure 10 indicates common mode voltage for continuous SVM at 50% modulation depth. The actual reduction of common mode voltage varies from 100% at low depth of modulation to comparatively little when the output voltage is high (corresponding to the length of the vector V_{S} in Figure 3).

Returning to the arrangement 100, the output filters (sinewave filters) 160, 162 and 164 are provided in conjunction with the wide-bandgap semiconductor devices 140 to 145 (which may switch very quickly and carry high voltages as explained above) in order to reduce electromagnetic compatibility (EMC) issues and noise and make the inverter performance invariant with motor lead length. In addition, ADSVM is used to avoid the ringing in the output filters explained above in connection with SDSVM.

As explained above, the use of SDSVM combined with a sinewave output filter will cause large oscillations of the filtered output due to the full DC-link voltage steps. The magnitude of the oscillation can be sufficient to trip the inverter 120 (which may have over-current protection not shown in Figure 4) or damage the transistors of switches 140 to 145. This problem is overcome by using ADSVM in arrangement 100, to eliminate the DC Link voltage steps on the output.

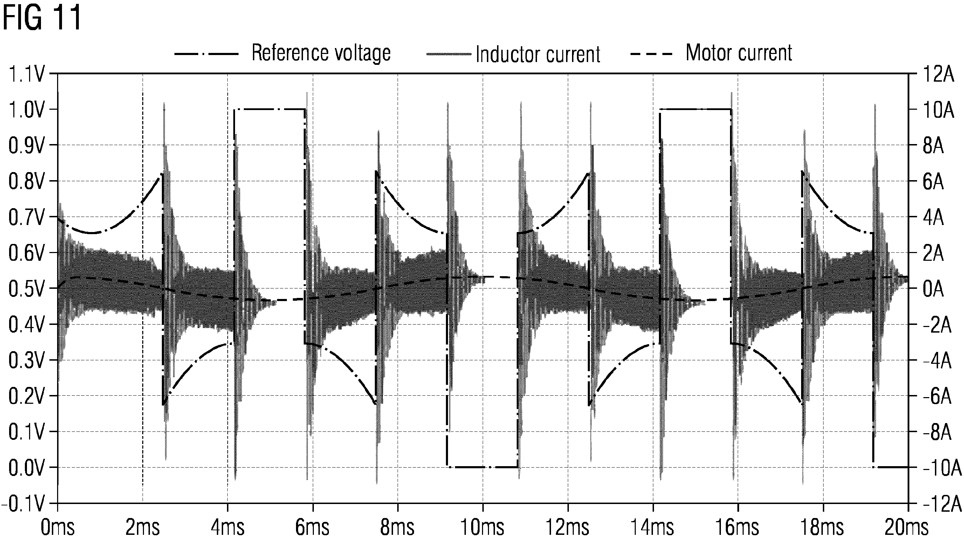

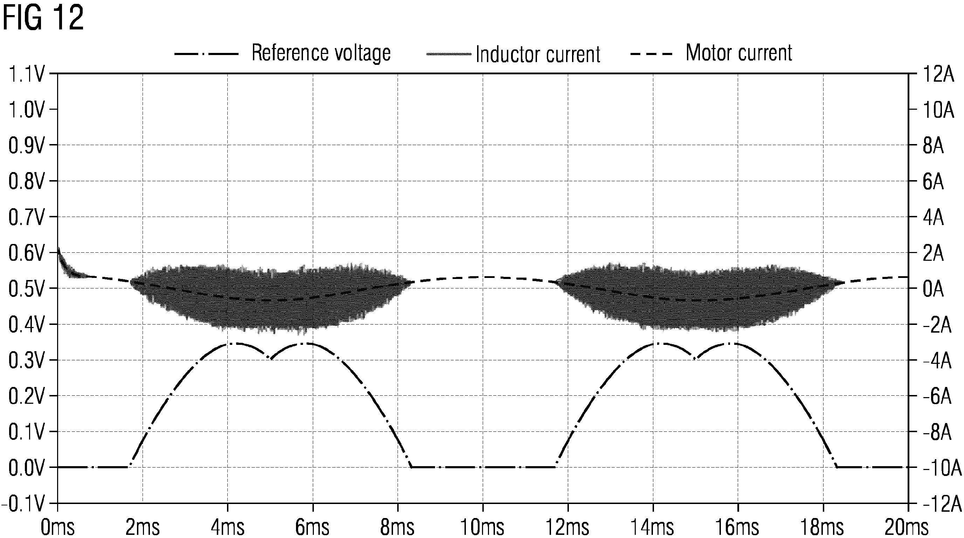

Figures 11 and 12 are signal diagrams indicating inductor current (continuous trace) for example in an inductor 172 of one of the filters 160, 162, 164, motor current (dashed trace) indicating effectively the current after the filter concerned, for example at one of the output terminals or nodes 30, 32, and 34 (and effectively for one of the windings 12, 14 and 16), and normalized output voltage (dash-dot trace) indicating the voltage at the one of the output terminals 30, 32, and 34 concerned. Figure 11 is provided for comparison purposes, and considers the hypothetical application of SDSVM to arrangement 100. Figure 12 relates to arrangement 100 itself, in which ADSVM is employed.

As can be seen from Figure 11, the normalized output voltage (dash-dot trace) is clamped alternately HIGH and LOW, in successive 120 degree phase sectors in which that phase (R, S or T) is clamped, these DC Link voltage steps causing the very significant ringing in the inductor current (continuous trace). In contrast, in Figure 12, the normalized output voltage (dash-dot trace) is clamped to LOW in each of the successive 120 degree phase sectors in which that phase (R, S or T) is clamped. As a result, the normalized output voltage (dash-dot trace) does not suffer from the DC Link voltage steps and ringing is reduced to a more minor ripple in the inductor current (continuous trace).

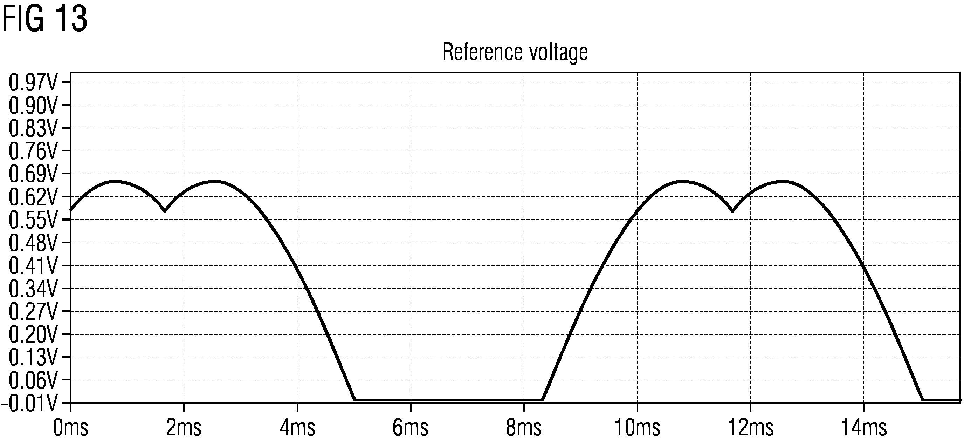

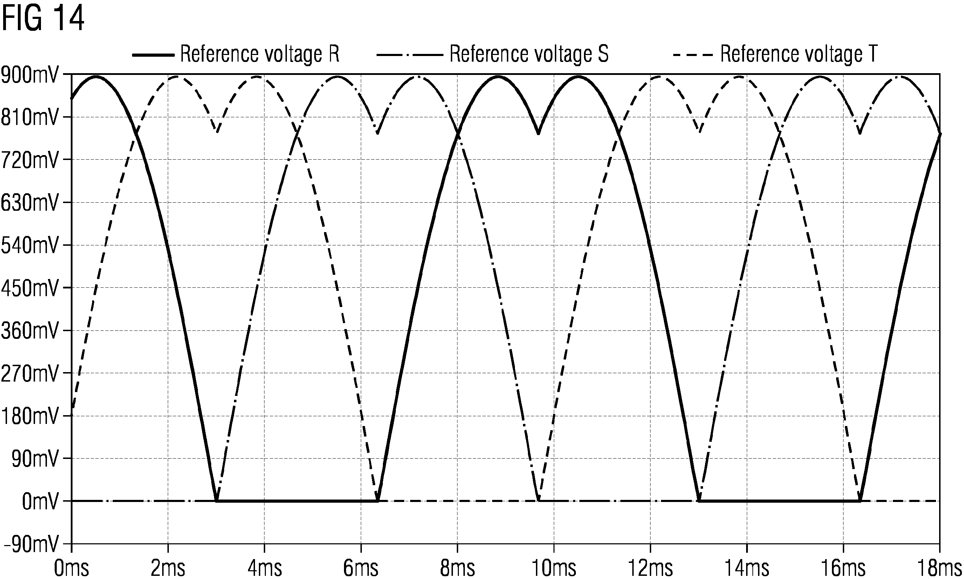

For ease of understanding, Figures 13 and 14 are signal diagrams showing normalized output voltages corresponding to the normalized output voltage (dash-dot trace) of Figure 12. In Figure 13, the normalized output voltage shown is for a single one of phases R, S and T, and is clamped LOW in successive 120 degree phase sectors for which that phase is clamped (i.e. for 1 in every 3 such phase sectors). In Figure 14, the normalized output voltages shown are for all three phases R, S and T, each shown in a different style of trace from continuous, dashed, and dash-dot.

The use of ADSVM PWM in the arrangement 100, whose inverter 120 has integrated output sinewave filters and wide-bandgap semiconductor switches 140 to 145, brings various advantages.

Switching losses are reduced by 1/3 as compared to use of continuous SVM, allowing this to increase the switching frequency and/or reduce the size of the output filters 160, 162 and 164. Alternatively, the efficiency of the inverter increases compared to use of continuous SVM methods.

The output common mode current is reduced by an average of 50%. This facilitates the replacement of the three differential inductors in the output filters 160, 162, 164 by a three-phase common mode choke, potentially reducing the cost and total size of a practical arrangement.

As regards EMC, the peak at twice the switching frequency will be reduced due to the ADSVM switching pattern/sequence. Further, the potential for significant ringing in the inductor currents is avoided, protecting the switches 140 to 145 from damage.

The arrangement 100 has thus been found advantageous as compared to for example using a large common mode choke in the output filters along with SDSVM, or using an inverter with 4 legs/poles to control common mode output content.

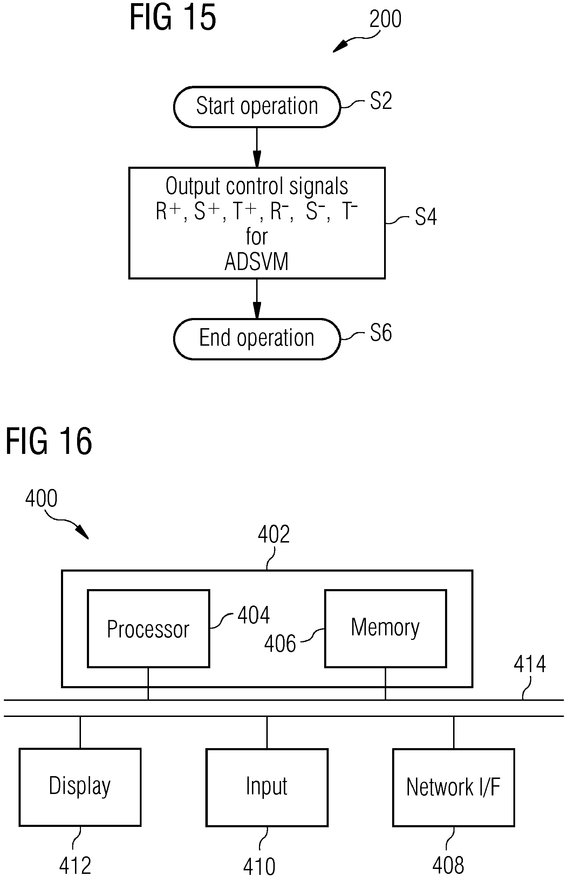

Figure 15 presents a flow diagram of a method 200 which may be carried out by the control unit 150. At step S2 operation is started, for example by input from a user via the input control signal shown in Figure 4. At step S4, the control signals R+, R-, S+, S-, T+ and T- are output such that the switches 140 to 145 operate according to an ADSVM switching sequence. At step S6, the operation is ended, for example by input from a user via the input control signal shown in Figure 4.

Figure 16 is a schematic diagram of a system 400 which may be used to implement the method 200. The system 400 comprises a computing device 402 comprising a processor 404, and memory, 406. Optionally, the computing device also includes a network interface 408 for communication with other computing devices.

In some arrangements of the disclosure, a network of such computing devices may be provided. Optionally, the computing device also includes one or more input mechanisms 410 such as keyboard and mouse, and a display unit 412 such as one or more monitors. The components are connectable to one another via a bus 414.

The memory 406 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, or flash memory devices (e.g., solid state memory devices).

The processor 404 is configured to control the computing device 402 and execute processing operations, for example executing code stored in the memory 404 to implement the various different step of the method 300 described here and in the claims. The memory 406 stores data being read and written by the processor 404. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 412 may display a representation of data stored by the computing device and may also display a cursor and dialog boxes and screens enabling interaction between a user and the programs and data stored on the computing device. The input mechanisms 410 may enable a user to input data and instructions to the computing device.

The network interface (network I/F) 408 may be connected to a network, such as the Internet, and is connectable to other such computing devices via the network. The network I/F 408 may control data input/output from/to other apparatus via the network. Other peripheral devices such as microphone, speakers, printer, power supply unit, fan, case, scanner, trackerball, etc. may be included in the computing device.

The steps of the method 200 may comprise processing instructions stored on a portion of the memory 406, using the processor 404 to execute the processing instructions, and using a portion of the memory 406 to store any data which may be generated during the execution of the processing instructions. An algorithm or switching sequence for ADSVM may be stored on the memory 406 and/or on a connected storage unit.

Methods according to arrangements of the present disclosure may be carried out on a computing device such as that illustrated in Figure 16. Such a computing device need not have every component illustrated in Figure 16, and may be composed of a subset of those components. A method according to arrangements of the present disclosure may be carried out by a single computing device in communication with one or more data storage servers via a network. The computing device may be a data storage itself.

A method according to arrangements of the present disclosure may be carried out by a plurality of computing devices operating in cooperation with one another. One or more of the plurality of computing devices may be a data storage server.

The system 400 may further comprise (although not shown) one or more of the components of the arrangement 100 described above with reference to Figure 4. For example, the system 400 may comprise the inverter 120.

It will be appreciated that this disclosure relates to inverters, such as power inverters. Such an inverter is configured such that its switches are controlled according to a space-vector-modulation switching sequence to create AC voltage waveforms at its output terminals, the voltage waveforms defining a voltage space vector which rotates through 360 degrees of phase, wherein the switching sequence is an asymmetrical discontinuous space-vector-modulation switching sequence and the switches comprise wide-bandgap semiconductor devices.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. An inverter (100, 120), comprising:
an input (24, 26) connectable to a DC power source (122, 22) so as to establish at least first and second DC electrical potential levels (V_{DC+}, V_{DC-}) at corresponding first and second input terminals (24, 26) of the input;
output circuitry comprising a plurality of output terminals (30, 32, 34), each output terminal (30; 32; 34) connected via switches (140, 141; 142, 143; 144, 145) to said input terminals (24, 26), those switches (140, 141; 142, 143; 144, 145) operable to selectively connect that output terminal (30; 32; 34) conductively to one of said input terminals at a time, and each output terminal (30; 32; 34) configured to be connected to a corresponding input terminal of a load; and
a control unit (150) configured to control the switches (140 to 145) according to a space-vector-modulation switching sequence to create AC voltage waveforms at said output terminals (30, 32, 34), the voltage waveforms defining a voltage space vector which rotates through 360 degrees of phase,
wherein:
the switching sequence is an asymmetrical discontinuous space-vector-modulation switching sequence; and
said switches (140 to 145) comprise wide-bandgap semiconductor devices.

2. An inverter (100, 120) as claimed in claim 1, wherein the switching sequence is configured to control the switches so that:
for each phase sector of consecutive phase sectors, a corresponding one of the output terminals (30, 32, 34) is held connected to one of the established DC electrical potential levels over that sector; and
the DC electrical potential level to which a said output terminal (30, 32, 34) is held conductively connected is the same for each of those phase sectors.

3. An inverter (100, 120) as claimed in claim 2, wherein said phase sectors are 120 degree phase sectors.

4. An inverter (100, 120) as claimed in any of the preceding claims, wherein said switches (140 to 145) comprise wide-bandgap semiconductor transistors.

5. An inverter (100, 120) as claimed in any of the preceding claims, comprising a filter (160, 162, 164) connected at each of said output terminals (30, 32, 34) so that the AC voltage waveforms provided at said output terminals (30, 32, 34) have been filtered by the corresponding filters (160, 162, 164).

6. An inverter (100, 120) as claimed in claim 5, wherein each said filter (160, 162, 164) is a sinewave filter.

7. An inverter (100, 120) as claimed in claim 5 or 6, wherein each said filter (160, 162, 164) is an LC filter.

8. An inverter as claimed in claim 5, 6 or 7, wherein each said filter (160, 162, 164) comprises:
a first capacitor (174) connected between the output terminal (30) concerned and the first input terminal (24);
a second capacitor (176) connected between the output terminal (30) concerned and the second input terminal (26); and
an inductor (172) connected in series along a signal path passing through the output terminal (30) concerned and configured to carry the AC voltage waveform concerned.

9. An inverter (100, 120) as claimed in any of the preceding claims, wherein said load (110) comprises windings of a three-phase motor.

10. A system (100) comprising:
an inverter (120) as claimed in any of the preceding claims; and
said DC power source (122) connected to the input of the inverter (120) so as to establish at least said first and second DC electrical potential levels at the corresponding first and second input terminals (24, 26) of the input of the inverter (120).

11. A system (100) as claimed in claim 10, comprising said load (110), wherein the output terminals (30, 32, 34) of the inverter are connected to the corresponding input terminals of the load (110).

12. A method (200) of controlling an inverter (100, 120), the inverter comprising:
an input (24, 26) connectable to a DC power source (122, 22) so as to establish at least first and second DC electrical potential levels (V_{DC+}, V_{DC-}) at corresponding first and second input terminals (24, 26) of the input; and
output circuitry comprising a plurality of output terminals (30, 32, 34), each output terminal (30; 32; 34) connected via switches (140, 141; 142, 143; 144, 145) to said input terminals (24, 26), those switches (140, 141; 142, 143; 144, 145) operable to selectively connect that output terminal (30; 32; 34) conductively to one of said input terminals at a time, and each output terminal (30; 32; 34) configured to be connected to a corresponding input terminal of a load, wherein the switches (140 to 145) comprise wide-bandgap semiconductor devices,
the method comprising:
controlling (S4) the switches (140 to 145) according to an asymmetrical discontinuous space-vector-modulation switching sequence to create AC voltage waveforms at said output terminals (30, 32, 34), the voltage waveforms defining a voltage space vector which rotates through 360 degrees of phase.

13. A control program for controlling an inverter (100, 120), the inverter comprising:
an input (24, 26) connectable to a DC power source (122, 22) so as to establish at least first and second DC electrical potential levels (V_{DC+}, V_{DC-}) at corresponding first and second input terminals (24, 26) of the input; and
output circuitry comprising a plurality of output terminals (30, 32, 34), each output terminal (30; 32; 34) connected via switches (140, 141; 142, 143; 144, 145) to said input terminals (24, 26), those switches (140, 141; 142, 143; 144, 145) operable to selectively connect that output terminal (30; 32; 34) conductively to one of said input terminals at a time, and each output terminal (30; 32; 34) configured to be connected to a corresponding input terminal of a load, wherein the switches (140 to 145) comprise wide-bandgap semiconductor devices,
the control program configured to cause a processor (404) of the inverter (100, 120) to carry out a method comprising:
controlling (S4) the switches (140 to 145) according to an asymmetrical discontinuous space-vector-modulation switching sequence to create AC voltage waveforms at said output terminals (30, 32, 34), the voltage waveforms defining a voltage space vector which rotates through 360 degrees of phase.

14. A computer readable medium having the control program of claim 11 stored thereon.
